# EUROPÄISCHE PATENTSCHRIFT

(11) **EP 1 244 871 B1**
(45) Veröffentlichungstag und Bekanntmachung des Hinweises auf die Patenterteilung: **27.07.2005**
(21) Anmeldenummer: 00985211.2
(22) Anmeldetag: 20.12.2000
(51) Int. Cl.: F02D 21/08

(54) **VORRICHTUNG UND VERFAHREN ZUR STEUERUNG EINER ABGASRÜCKFÜHRRATE EINER ABGASRÜCKFÜHREINRICHTUNG FÜR VERBRENNUNGSKRAFTMASCHINEN WÄHREND EINES MAGERBETRIEBS**
DEVICE AND METHOD FOR CONTROLLING A RATE OF RECIRCULATED EXHAUST GAS OF AN EXHAUST GAS RECIRCULATION DEVICE FOR COMBUSTION ENGINES DURING LEAN OPERATION
DISPOSITIF ET PROCEDE POUR COMMANDER LA VITESSE DE REINJECTION DE GAZ D'ECHAPPEMENT D'UN DISPOSITIF DE REINJECTION DE GAZ D'ECHAPPEMENT POUR MOTEURS A COMBUSTION INTERNE PENDANT LE FONCTIONNEMENT EN MODE MELANGE PAUVRE

(30) Priorität: 07.01.2000 DE 10000339
(43) Veröffentlichungstag der Anmeldung: 02.10.2002
(73) Patentinhaber: Volkswagen Aktiengesellschaft, 38436 Wolfsburg (DE)
(72) Erfinder: POTT, Ekkehard, 38518 Gifhorn (DE); HAHN, Hermann, 30175 Hannover (DE); HINZE, Sören, 38114 Braunschweig (DE); EBUS, Feitse, 38446 Wolfsburg (DE)
(74) Vertreter: Pohlmann, Bernd Michael
(86) Internationale Anmeldenummer: PCT/EP2000/013008
(87) Internationale Veröffentlichungsnummer: WO 2001/051792

(56) Entgegenhaltungen:
- EP-A- 0 363 021
- EP-A- 0 867 604
- EP-A- 0 953 751
- DE-A- 19 739 848
- DE-C- 19 643 053
- US-A- 5 426 934
- US-A- 5 564 283
- US-A- 5 579 743
- US-A- 5 595 060
- US-A- 5 992 142
- PATENT ABSTRACTS OF JAPAN vol. 017, no. 479 (M-1471), 31. August 1993 (1993-08-31) -& JP 05 113157 A (TOYOTA MOTOR CORP), 7. Mai 1993 (1993-05-07)

## Beschreibung

Die Erfindung betrifft eine Vorrichtung und ein Verfahren zur Steuerung einer Abgasrückführrate (AGR-Rate) einer Abgasrückführeinrichtung (AGR-Einrichtung) für Verbrennungskraftmaschinen während eines Magerbetriebs mit den in den Oberbegriffen der unabhängigen Ansprüche genannten Merkmalen.

Im Zuge fortschreitender Verbrauchsoptimierung magerlaufender Verbrennungsmotoren hat es sich als vorteilhaft erwiesen, einen sogenannten Schichtbetrieb möglichst lange aufrechtzuerhatten. Im Schichtbetrieb muß ein zu verbrennendes Luft-Kraftstoff-Gemisch nur im Bereich der Zündkerzen zündfähig sein. Im übrigen Teil eines Brennraums befindet sich dann überwiegend Frisch- und Restgas ohne unverbrannten Kraftstoff. Dieses insgesamt sehr magere Gemisch erlaubt zwar eine Reduzierung des Kraftstoffverbrauchs, jedoch ist eine Anwendung auf einen Leerlauf- und Teillastbereich beschränkt.

Sobald eine Lastanforderung an die Verbrennungskraftmaschine sich dem Bereich einer Vollast nähert, wird über ein Einspritzsystem ein Homogenbetrieb eingeregelt. Im Homogenbetrieb liegt im gesamten Brennraum ein homogenes Gemisch vor. Damit nimmt die gesamte im Brennraum verfügbare Frischluft am Verbrennungsvorgang teil. Auch der Homogenbetrieb kann unter mageren Bedingungen durchgeführt werden. Dazu wird neben den durch das Einspritzsystem regelbaren Größen, wie Einspritzmenge, Zündzeitpunkt und Einspritzdruck, ein Luftmassenstrom zur Steuerung der Luft-Kraftstoff-Zusammensetzung beeinflußt. Dabei kann beispielsweise ein Ansaugvolumen mittels einer Drosselklappe in einem Ansaugrohr der Verbrennungskraftmaschine erhöht oder erniedrigt werden. Daneben hat es sich als vorteilhaft erwiesen, den Luftmassenstrom und seine Zusammensetzung mittels der AGR-Einrichtung zu beeinflussen.

Die AGR-Einrichtung umfaßt ein in einer Abgasrückführleitung angeordnetes Stellmittel, dem über ein Steuergerät Stellgrößen vorgegeben werden, die letztendlich eine Einstellung oder Aufrechterhaltung einer gewünschten AGR-Rate bewirken. Als Stellmittel kommen beispielsweise in Frage ein Regelventil oder eine Drosselklappe, und die Stellgrößen sind dann entsprechend ein Öffnungsquerschnitt des Regelventils oder ein Öffnungswinkel der Drosselklappe.

Während des Verbrennungsvorgangs werden in unterschiedlichen Anteilen Schadstoffe wie Kohlenmonoxid CO, unverbrannte Kohlenwasserstoffe HC oder Stickoxide NOₓ gebildet. Unter mageren Bedingungen ist der Anteil von CO und HC relativ gering und kann durch Einsatz geeigneter Oxidationskatalysatoren weiter gesenkt werden. Eine NOₓ-Rohemission der Verbrennungskraftmaschine steigt unter mageren Bedingungen allerdings an. Zwar kann auch NOₓ an sogenannten Reduktionskatalysatoren mit Hilfe von Reduktionsmitteln wie HC oder CO wieder zersetzt werden, jedoch sind im allgemeinen die dazu notwendigen Reduktionsmittelmassen im Magerbetrieb nicht vorhanden.

Zur Abhilfe kann einerseits versucht werden, die NOₓ-Rohemission im Magerbetrieb zu senken oder das emittierte NOₓ wird in einem Absorber unter mageren Bedingungen eingelagert. Erstere Methode nutzt dabei aus, daß die NOₓ-Bildung in magerer Atmosphäre nicht linear ansteigt, sondern bei einem Luftverhältnis von λ zirka 1,1 ein Maximum durchläuft. Dieser Lambdabereich ist allerdings mit Hinsicht auf eine Optimierung des Kraftstoffverbrauchs im Homogenbetrieb bevorzugt. Bekannt ist, daß die NOₓ-Rohemission mit steigender AGR-Rate sinkt. Nachteilig ist jedoch, daß die NOₓ-Rohemission sehr empfindlich auf die AGR-Rate reagiert, so daß beispielsweise Abweichungen von einer Voreinstellung in Höhe von ±3 % zu einer Abweichung der NOₓ-Rohemission im Bereich von -50 bis +100 % führen können.

Ist im Abgasstrang zusätzlich ein NOₓ-Absorber angeordnet, der gegebenenfalls mit dem Reduktionskatalysator zu einem NOₓ-Speicherkatalysator zusammengefaßt werden kann, so können zwar entstehende NOₓ-Emissionen eingelagert werden, jedoch ist eine Regelung einer Regeneration des NOₓ-Speicherkatalysators erschwert. Zur Regeneration muß der NOₓ-Speicherkatalysator zumindest kurzfristig mit einem fetten Abgas beaufschlagt werden und zwar bevor eine NOₓ-Speicherkapazität erschöpft ist (Regenerationsnotwendigkeit). Die Regenerationsnotwendigkeit wird üblicherweise anhand von Modellen für den NOₓ-Speicherkatalysator beziehungsweise für das während des Verbrennungsvorgangs entstehende NOₓ (NOₓ-Rohemission) bestimmt. Aufgrund der obig genannten Ungenauigkeiten der Voreinstellung der AGR-Rate, die zu hohen Abweichungen bei der NOₓ-Rohemission führen können, müssen bei den bekannten Modellen zur Regelung der Regeneration hohe Toleranzen aufgenommen werden. Daraus resultiert eine unnötig hohe Regenerationsfrequenz und infolgedessen auch ein unnötig hoher Kraftstoffverbrauch. Femer wird eine Kontrolle einer NOₓ-Aktivität des NOₓ-Speicherkatalysators erschwert, da bei Modell-Ungenauigkeiten in vorstehend genannter Größenordnung auch nur ungenaue Aussagen zur Deaktivierung des NOₓ-Speicherkatalysators getroffen werden können.

Ein Verfahren und eine Vorrichtung gemäß dem Oberbegriff der unabhängigen Ansprüche sind aus JP 05 113 157 A bekannt.

Der Erfindung liegt daher die Aufgabe zugrunde, eine Vorrichtung und ein Verfahren zur Verfügung zu stellen, mit denen eine sehr viel genauere Steuerung der AGR-Rate während des Magerbetriebs ermöglicht wird, so daß damit einhergehend auch sehr viel exaktere Modelle zur Ermittlung der NOₓ-Rohemission der Verbrennungskraftmaschine bereitgestellt werden können.

Erfindungsgemäß wird diese Aufgabe durch eine Vorrichtung und ein Verfahren zur Steuerung der AGR-Rate der AGR-Einrichtung für Verbrennungskraftmaschinen mit den in den unabhängigen Ansprüchen genannten Merkmalen gelöst.

Weitere bevorzugte Ausgestaltungen der Erfindung ergeben sich aus den in den Unteransprüchen genannten Merkmalen.

Die Erfindung wird nachfolgend in einem Ausführungsbeispiel anhand der zugehörigen Zeichnungen näher erläutert. Es zeigen:
- Figur 1: ein Prinzipschaltbild einer Verbrennungskraftmaschine mit einer Abgasrückführeinrichtung und einem NOₓ-Speicherkatalysator sowie einem NOₓ-Sensor im Abgasstrang;
- Figuren 2 und 3: die Verläufe ausgewählter Schadstoffkomponenten in Bezug auf ein Luftverhältnis Lambda bei einem Ottomotor beziehungsweise einem Dieselmotor und
- Figur 4: ein Ablaufdiagramm zur Steuerung einer Abgasrückführrate der Abgasrückführeinrichtung.

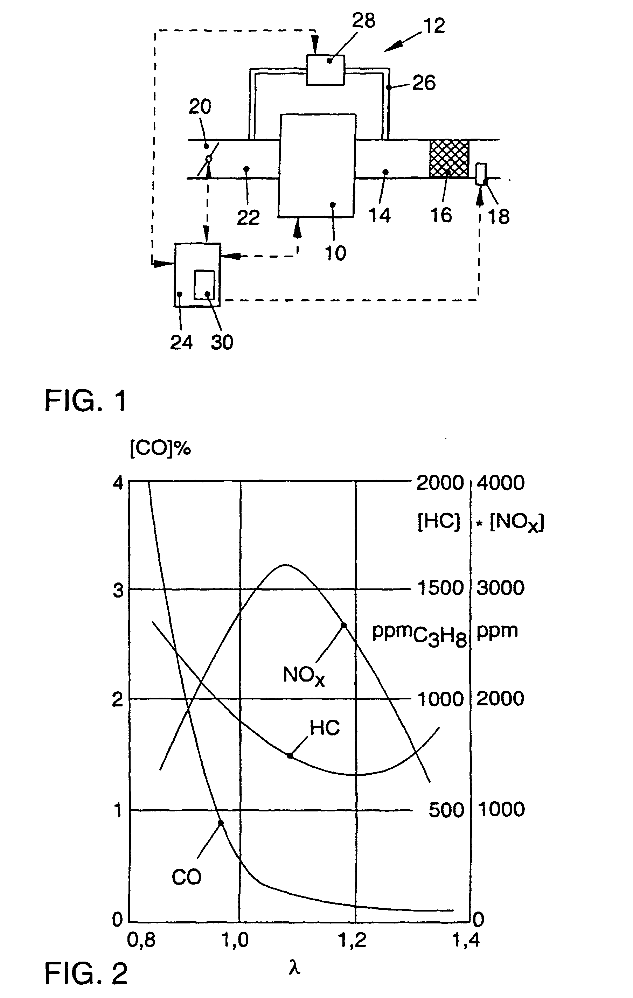

Die Figur 1 zeigt ein Prinzipschaltbild einer Verbrennungskraftmaschine 10, der eine Abgasrückführeinrichtung 12 zugeordnet ist. Ein während eines Verbrennungsvorgangs entstehendes Abgas wird über einen Abgasstrang 14 abgeführt und zur Reinigung durch einen NOₓ-Speicherkatalysator 16 geleitet. Stromab des NOₓ-Speicherkatalysators 16 ist ein NOₓ-Sensor 18 im Bereich des Abgasstranges 14 angeordnet. Weiterhin kann ein Ansaugvolumen über eine Drosselklappe 20, die sich in einem Ansaugrohr 22 der Verbrennungskraftmaschine 10 befindet, geregelt werden. Eine solche Regelung kann in digitalisierter Form in einem Motorsteuergerät 24 hinterlegt sein. Über das Motorsteuergerät 24 ist ferner eine Steuerung weiterer, der Verbrennungskraftmaschine 10 zugeordneter Komponenten denkbar. So kann beispielsweise über ein hier nicht dargestelltes Einspritzsystem eine Einspritzmenge oder Einspritzzeit geregelt werden.

Die Abgasrückführeinrichtung (AGR-Einrichtung) 12 umfaßt ein in einer Abgasrückführleitung 26 angeordnetes Stellmittel 28, mit dem eine Abgasrückführrate (AGR-Rate) eingestellt werden kann. Als Stellmittel 28 kommen beispielsweise in Frage ein Regelventil oder eine Drosselklappe. Dazu wird über das Motorsteuergerät 24 dem Stellmittel 28 eine Stellgröße vorgegeben, die zur Einstellung eines Sollwertes für die AGR-Rate führen soll. Eine Steuerung des Stellmittels 28 in Abhängigkeit von einem durch den NOₓ-Sensor 18 zur Verfügung gestellten Signal ist im weiteren Gegenstand der Beschreibung. Eine hierzu geeignete Prozedur ist in einem Steuergerät 30 in digitalisierter Form hinterlegt. Das Steuergerät 30 ist hier in das Motorsteuergerät 24 integriert, kann aber auch als selbständige Einheit realisiert werden.

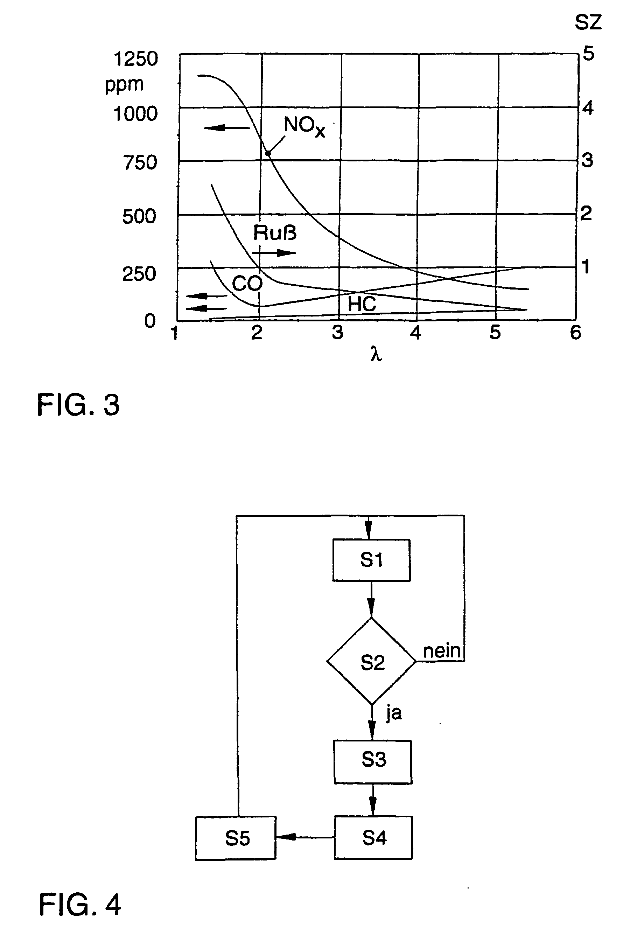

Die Figuren 2 und 3 zeigen jeweils die Verläufe ausgewählter Schadstoffkomponenten bei einem Otto- beziehungsweise einem Dieselmotor in bezug auf ein Luftverhältnis Lambda. Selbstverständlich sind die hier gezeigten, an einem Motorprüfstand ermittelten Emissionen der einzelnen Schadstoffkomponenten abhängig von bauspezifischen Merkmalen der verwendeten Motoren, so daß eine Lage der Maxima, Minima und der Verläufe abweichen kann. Prinzipiell ist jedoch der skizzierte Verlauf der einzelnen Schadstoffkomponenten bei Diesel- beziehungsweise Ottomotoren in der aufgezeigten Weise zu erwarten. Beim Wechsel von einem Schichtbetrieb in einen Homogenbetrieb - beispielsweise infolge einer erhöhten Lastanforderung - sind prinzipiell gleichartige Verläufe für beide Betriebsarten zu erwarten. Die Lage der Wendepunkte, als auch die absoluten Emissionen können allerdings voneinander abweichen. Da das Emissionsniveau im Homogenbetrieb bis maximal etwa λ = 1,5 im allgemeinen deutlich höher liegt als im Schichtbetrieb, führen kleine Abweichungen der AGR-Rate zu wesentlichen höheren Abweichungen der NOₓ-Rohemission.

Üblicherweise wird das Luftverhältnis Lambda bei einem Ottomotor in einem sehr viel engeren Arbeitsbereich geregelt. Mit steigendem Sauerstoffanteil im zu verbrennenden Luft-Kraftstoff-Gemisch sinken die Anteile von Schadstoffkomponenten wie Kohlenmonoxid CO und unverbrannten Kohlenwasserstoffen HC. Auf der anderen Seite steigt eine Emission von Stickoxiden NOₓ mit zunehmendem Lambda an. Dieser Anstieg ist allerdings nicht stetig, sondern durchläuft ein Maximum bei einem Luftverhältnis von zirka λ = 1,1. Gerade dieser Betriebsbereich ist bei Ottomotoren mit Hinsicht auf eine Verbrauchsoptimierung bevorzugt.

Dieselmotoren werden im allgemeinen bei deutlich höheren Luftverhältnissen zwecks Optimierung der Verbrauchswerte betrieben, jedoch kann in bestimmten Betriebssituationen ein Betrieb unter deutlich niedrigeren Lambdawerten, insbesondere unter λ = 1,5, notwendig sein. Neben erhöhten Rußemissionen steigt die NOₓ-Rohemission des Dieselmotors stark an, verläuft allerdings, wie auch beim Ottomotor, nicht stetig.

Wird, wie in diesem Ausführungsbeispiel, ein NOₓ-Speicherkatalysator 16 im Abgasstrang 14 der Verbrennungskraftmaschine 10 angeordnet, so erfolgt eine Absorption des gebildeten NOₓ unter mageren Bedingungen. Da die Absorberkomponente nur eine endliche Speicherkapazität besitzt, muß in regelmäßigen Abständen eine Regeneration durch einen Wechsel in eine fette Atmosphäre erfolgen. Unter fetter Atmosphäre stehen dann die zur Regeneration notwendigen Reduktionsmittelmassenströme (CO- und HC-Massenströme) zur Verfügung. Notwendigerweise solite die Regeneration möglichst frühzeitig eingeleitet werden, um eine NOₓ-Durchbruchsemission (NOₓ-Emission stromab des NOₓ-Speicherkatalysators 16) möglichst gering zu halten. Aus Kostengründen ist dabei ein Einsatz eines zweiten NOₓ-Sensors stromauf des NOₓ-Speicherkatalysators 16 zwar denkbar, jedoch zu aufwendig, und es wird daher auf Modelle zurückgegriffen, mit denen die NOₓ-Rohemission der Verbrennungskraftmaschine 10 berechnet werden kann. Derartige Modelle sind bekannt und sollen an dieser Stelle nicht näher erläutert werden. Lediglich festzuhalten bleibt, daß diesen Modellen gemeinsam ist, als Eingangsgröße das Luftverhältnis Lambda zu berücksichtigen. Häufig ist jedoch die über das Stellmittel 28 eingestellte AGR-Rate abweichend von einer tatsächlichen AGR-Rate. Wird die Verbrennungskraftmaschine 10 im Bereich eines Luftverhältnisses von λ = 1 bis 1,5 betrieben, so können die an sich geringen Abweichungen der tatsächlichen AGR-Rate von der Soll-Vorgabe zu der hohen Abweichung der NOₓ-Rohemission führen. Damit sind die Modelle zur Berechnung der NOₓ-Rohemissionen ebenfalls stark fehlerbehaftet, und es treten große Abweichungen zwischen einer tatsächlichen und einer aufgrund der modellierten NOₓ-Rohemissionen zu erwartenden Regenerationsfrequenz auf.

Die Figur 4 zeigt ein Ablaufdiagramm, mit dem die Steuerung der AGR-Rate deutlich exakter erfolgen kann. Zunächst wird in einem Schritt S1 eine vorläufige NOₓ-Rohemission der Verbrennungskraftmaschine 10 berechnet und nachfolgend eine NOₓ-Durchbruchsemission stromab des NOₓ-Speicherkatalysators 16 ermittelt. Für letztere Berechnung kann auf bekannte Modelle für eine NOₓ-Aktivität eines frischen NOₓ-Speicherkatalysators 16 zurückgegriffen werden. Ebenso ist es jedoch möglich, den NOₓ-Durchbruch auf der Basis des gegenwärtigen Ist-Zustandes des NOₓ-Speicherkatalysators 16 zu ermitteln. Mit Hilfe des NOₓ-Sensors 18 wird der NOₓ-Durchbruch stromab des NOₓ-Speicherkatalysators 16 gemessen. In Betriebszuständen der Verbrennungskraftmaschine 10 mit geringen NOₓ-Rohemissionen, beispielsweise im geschichtet-mageren Betrieb mit λ > 2 und geringen Motorlasten (< 3 bar), sind die absoluten Abweichungen der berechneten NOₓ-Emissionen vor dem NOₓ-Speicherkatalysator 16 von den tatsächlichen Emissionen so gering, daß der Ist-Zustand des NOₓ-Speicherkatalysators 16 mit ausreichender Genauigkeit erfaßt werden kann. Wird in einem vorbestimmbaren, nachfolgenden Zeitraum von beispielsweise 30 Minuten der Verbrennungsmotor 10 im Magerbetrieb mit hohen NOₓ-Rohemissionen betrieben, so kann davon ausgegangen werden, daß sich die NOₓ-Aktivität in diesem Zeitraum allenfalls geringfügig geändert hat und somit die aktuelle NOₓ-Aktivität für die Berechnung der NOₓ-Durchbruchsemissionen stromab des NOₓ-Speicherkatalysators 16 zugrunde gelegt werden kann. Mit diesem Verfahren wird eine Anpassung der zu erwartenden NOₓ-Durchbruchsemissionen an Katalysatorschädigungen durch vorhergehende Hochtemperaturbelastung oder Schwefelvergiftung sowie eine Anpassung an Serienstreuungen in der Katalysatorfertigung ermöglicht. Dieses Verfahren ist somit wesentlich genauer als eine reine Modellierung der NOₓ-Aktivität.

In einem sich anschließenden Schritt S2 wird eine Abweichung der berechneten NOₓ-Durchbruchsemission von einer stromab durch den NOₓ-Sensor 18 erfaßten tatsächlichen NOₓ-Durchbruchsemission bestimmt. Die Messung erfolgt in einem vorgebbaren Meßintervall, dessen Dauer beispielsweise anhand der NOₓ-Rohemission und/oder der berechneten NOₓ-Durchbruchsemission festgelegt werden kann. Es wird überprüft, ob die Abweichung einen vorgegebenen Schwellenwert überschreitet. Ist dies nicht der Fall, so wird das Verfahren an dieser Stelle abgebrochen.

Im Schritt S3 wird in Abhängigkeit von der Abweichung der Emissionen ein Korrekturwert für die AGR-Rate ermittelt. Dies kann beispielsweise derart erfolgen, daß der Korrekturwert aus einer Kennlinie für die Abweichung der Emissionen ausgelesen wird. Zur Festlegung einer derartigen Kennlinie kann zumindest zusätzlich eine Lastsituation berücksichtigt werden. So können beispielsweise für den Homogen- oder Schichtbetrieb verschiedene Kennlinien gewählt werden. Gegebenenfalls kann die Steuerung nach dem vorliegenden Verfahren sogar unterbrochen werden, wenn beispielsweise starke Lastwechsel innerhalb des Meßintervalls detektiert werden, da diese zu erheblichen Ungenauigkeiten in dem zugrundeliegenden Modell führen.

Der vorab ermittelte Korrekturwert für die AGR-Rate kann in einem nachfolgenden Schritt S4 noch durch einen Maximalwert begrenzt werden. Denkbar ist auch, daß die Steuerung der AGR-Rate nur fortgesetzt wird, wenn der Korrekturwert einen vorgegebenen Minimalwert überschreitet. Die Minimal- beziehungsweise Maximalwerte können in Abhängigkeit vom Fahrverhalten oder der Fahrsituation bestimmt werden. Der gegebenenfalls begrenzte Korrekturwert dient in einem Schritt S5 zur Festlegung einer Stellgröße für das Stellmittel 28 der Abgasrückführeinrichtung 12.

## Patentansprüche

1. Verfahren zur Steuerung einer Abgasrückführrate (AGR-Rate) einer Abgasrückführeinrichtung (12) (AGR-Einrichtung) für Verbrennungskraftmaschinen während eines Magerbetriebs, wobei einem in einer Abgasrückführleitung (26) angeordneten Stellmittel (28) der AGR-Einrichtung (12) eine Stellgröße vorgegeben wird, die eine Einstellung oder Aufrechterhaltung einer gewünschten Abgasrückführrate bewirkt und dass eine Abweichung einer berechneten Schadstoffemission von einer durch einen NOₓ-Sensor stromab eines NOx-Speicherkatalysators (16) im Abgasstrang (14) der Verbrennungskraftmaschine (10) gemessenen Schadstoffemission errnittelt und in Abhängigkeit von einer Höhe der Abweichung ein Korrekturwert für die Stellgröße des Stellmittels (28) der AGR-Einrichtung (12) bestimmt wird.,
**dadurch gekennzeichnet, dass**
- eine von dem NOx-Sensor (18) gemessene NOx-Durchbruchemission mit einer berechneten NOx-Durchbruchemission verglichen wird und dass
- die Ermittlung der berechneten NOx-Durchbruchemission auf der Basis einer im geschichtet mageren Betrieb der Verbrennungskraftmaschine (10), inbesondere in einem Lambdabereich, Lambda > 1,8, ermittelten NOx-Aktivität des NOx-Speicherkatalysators (16) erfolgt.

2. Verfahren nach Anspruch 1, **dadurch gekennzeichnet, dass**
- die Berechnung der NOx-Durchbruchsemissionen auf der Basis einer modellierten Frisch-NOx-Aktivität des NOx-Speicherkatalysators (16) erfolgt.

3. Verfahren nach Anspruch 1, **dadurch gekennzeichnet, dass**
- die Berechnung der NOx-Durchbruchsemissionen auf der Basis einer in einem vorbestimmbaren, vorgelagerten Zeitraum ermittelten NOx-Aktivität des NOx-Speicherkatalysators (16) erfolgt.

4. Verfahren nach Anspruch 3, **dadurch gekennzeichnet, dass**
- der vorbestimmbare, vorgelagerte Zeitraum maximal 30 Minuten beträgt.

5. Verfahren nach einem der vorhergehenden Ansprüche, **dadurch gekennzeichnet, dass**
- die Steuerung der AGR-Rate während eines Homogenbetriebs der Verbrennungskraftmaschine (10) unter mageren Bedingungen, insbesondere in einem Lambdabereich von 1,001 bis 1,6, erfolgt

6. Verfahren nach einem der vorhergehenden Ansprüche, **dadurch gekennzeichnet, dass**
- die Abweichung der Emissionen einen vorgegebenen Schwellenwert überschreiten muß, bevor die Steuerung der AGR-Rate erfolgt.

7. Verfahren nach einem der vorhergehenden Ansprüche, **dadurch gekennzeichnet, dass**
- die Abweichung der Emissionen in einem vorgebbaren Meßintervall bestimmt wird, wobei eine Dauer des Meßintervalls in Abhängigkeit von einer NOₓ-Rohemission der Verbrennungskraftmaschine (10) und/oder der berechneten NOₓ-Durchbruchsemission bestimmt wird.

8. Verfahren nach einem der vorhergehenden Ansprüche, **dadurch gekennzeichnet, dass**
- der Korrekturwert anhand einer Kennlinie für die Abweichung der Emissionen bestimmt wird.

9. Verfahren nach einem der vorhergehenden Ansprüche, **dadurch gekennzeichnet, dass**
- der Korrekturwert zusätzlich in Abhängigkeit von einer Lastsituation festgelegt wird.

10. Verfahren nach einem der vorhergehenden Ansprüche, **dadurch gekennzeichnet, dass**
- der Korrekturwert nur berücksichtigt wird, wenn er einen Minimalwert überschreitet.

11. Verfahren nach einem der vorhergehenden Ansprüche, **dadurch gekennzeichnet, dass**
- der Korrekturwert durch einen Maximalwert begrenzt wird.

12. Verfahren nach einem der Ansprüche 10 bis 11, **dadurch gekennzeichnet, dass**
- der Minimalwert und/oder der Maximalwert in Abhängigkeit von einer Fahrsituation und/oder einem Fahrverhalten festgelegt werden.

13. Vorrichtung zur Steuerung einer Abgasrückführrate (AGR-Rate) einer Abgasrückführeinrichtung (AGR-Einrichtung) für Verbrennungskraftmaschinen während eines Magerbetriebs, wobei einem in einer Abgasrückführleitung angeordneten Stellmittel der AGR-Einrichtung eine Stellgröße vorgegeben ist, die eine Einstellung oder Aufrechterhaltung einer gewünschten Abgasrückführrate bewirkt, und das Mittel vorgesehen sind, mit denen eine Abweichung einer berechneten Schadstoffemission von einer durch einen NOx-Sensor (18) im Abgasstrang (14) der Verbrennungskraftmaschine (10) gemessenen Schadstoffemission ermittelt und in Abhängigkeit von einer Höhe der Abweichung ein Korrekturwert für die Stellgröße des Stellmittels (28) der AGR-Efnrichtung (12) bestimmt wird, **dadurch gekennzeichnet, dass**
- eine von dem NOx-Sensor (18) gemessene NOx-Durchbruchemission mit einer berechneten NOx-Durchbruchemission verglichen wird und dass
- die Ermittlung der berechneten NOx-Durchbruchemission auf der Basis einer Im geschichtet mageren Betrieb der Verbrennungskraftmaschine (10), inbesondere in einem Lambdabereich. Lambda > 1,8, ermittelten NOx-Aktivität des NOx-Speicherkatalysators (16) erfolgt.

14. Vorrichtung nach Anspruch 13, **dadurch gekennzeichnet, dass**
- diese Mittel ein Steuergerät (30) umfassen, in dem eine Prozedur zur Steuerung der AGR-Einrichtung (12) in digitalisierter Form hinterlegt ist.

15. Vorrichtung nach Anspruch 14, **dadurch gekennzeichnet, dass**
- das Steuergerät (30) Teil eines Motorsteuergerätes (24) ist.

16. Vorrichtung nach einem der Ansprüche 13 bis 15, **dadurch gekennzeichnet, dass**
- das Stellmittel (28) ein Regelventil und die Stellgröße ein Öffnungsquerschnitt oder ein Verstellweg des Regelventils ist.

17. Vorrichtung nach einem der Ansprüche 13 bis 16, **dadurch gekennzeichnet, dass**
- als Stellmittel (28) eine Drosselklappe und die Stellgröße ein Öffnungswinkel der Drosselklappe ist.

## Claims

1. Method for controlling an exhaust gas recirculation rate (EGR rate) of an exhaust gas recirculation device (12) (EGR device) for internal combustion engines during lean-burn mode, in which a control variable, which is responsible for setting or maintaining a desired exhaust gas recirculation rate, is predetermined to an actuator (28), arranged in an exhaust gas recirculation line (26), of the EGR device (12), and in which a deviation in a calculated pollutant emission level from a pollutant emission level measured by an NOₓ sensor downstream of an NOx storage catalytic converter (16) in the exhaust section (14) of the internal combustion engine (10) is determined, and a correction value for the control variable of the actuator (28) of the EGR device (12) is determined as a function of the magnitude of the deviation, **characterized in that**
- an NOx breakthrough emission level measured by the NOx sensor (18) is compared with a calculated NOx breakthrough emission, and **in that**
- the calculated NOx breakthrough emission is determined on the basis of an NOx activity level, determined in stratified lean-burn mode of the internal combustion engine (10), in particular in a lambda range of lambda > 1.8, of the NOx storage catalytic converter (16).

2. Method according to Claim 1, **characterized in that**
- the NOx breakthrough emission levels are calculated on the basis of a modelled fresh NOx activity level of the NOx storage catalytic converter (16).

3. Method according to Claim 1, **characterized in that**
- the NOx breakthrough emission levels are calculated on the basis of an NOx activity level, determined in a predefinable, preceding period, of the NOx storage catalytic converter (16).

4. Method according to Claim 3, **characterized in that**
- the predefinable, preceding time period amounts to at most 30 minutes.

5. Method according to one of the preceding claims, **characterized in that**
- the control of the EGR rate is effected during homogenous operation of the internal combustion engine (10) under lean-burn conditions, in particular in a lambda range from 1.001 to 1.6.

6. Method according to one of the preceding claims, **characterized in that**
- the deviation in the emission levels has to exceed a predetermined threshold value before control of the EGR rate takes place.

7. Method according to one of the preceding claims, **characterized in that**
- the deviation in the emission levels is determined during a predefinable measurement interval, the duration of the measurement interval being determined as a function of an untreated NOₓ emission level from the internal combustion engine (10) and/or the calculated NOₓ breakthrough emission level.

8. Method according to one of the preceding claims, **characterized in that**
- the correction value is determined on the basis of a characteristic curve for the deviation in the emission levels.

9. Method according to one of the preceding claims, **characterized in that**
- the correction value is additionally defined as a function of a load situation.

10. Method according to one of the preceding claims, **characterized in that**
- the correction value is only taken into account if it exceeds a minimum value.

11. Method according to one of the preceding claims, **characterized in that**
- the correction value is limited by a maximum value.

12. Method according to one of Claims 10 to 11, **characterized in that**
- the minimum value and/or the maximum value are defined as a function of a driving situation and/or driving characteristics.

13. Apparatus for controlling an exhaust gas recirculation rate (EGR rate) of an exhaust gas recirculation device (EGR device) for internal combustion engines during lean-burn mode, in which a control variable, which is responsible for setting or maintaining a desired exhaust gas recirculation rate, is predetermined to an actuator, arranged in an exhaust gas recirculation line, of the EGR device, and in which there are means by which a deviation in a calculated pollutant emission level from a pollutant emission level measured by an NOx sensor (18) in the exhaust section (14) of the internal combustion engine (10) is determined, and a correction value for the control variable of the actuator (28) of the EGR device (12) is determined as a function of the magnitude of the deviation, **characterized in that**
- an NOx breakthrough emission level measured by the NOx sensor (18) is compared with a calculated NOx breakthrough emission level, and **in that**
- the calculated NOx breakthrough emission level is determined on the basis of an NOx activity level, determined in stratified lean-burn mode of the internal combustion engine (10), in particular in a lambda range of lambda > 1.8, of the NOx storage catalytic converter (16).

14. Apparatus according to Claim 13, **characterized in that**
- these means comprise a control unit (30) in which a procedure for controlling the EGR device (12) is stored in digitized form.

15. Apparatus according to Claim 14, **characterized in that**
- the control unit (30) is part of an engine control unit (24).

16. Apparatus according to one of Claims 13 to 15, **characterized in that**
- the actuator (28) is a control valve, and the control variable is an opening cross section or a displacement travel of the control valve.

17. Apparatus according to one of Claims 13 to 16, **characterized in that**
- the actuator (28) is a throttle valve and the control variable is an opening angle of the throttle valve.

## Revendications

1. Procédé pour commander le taux de recirculation des gaz d'échappement ("AGR") d'un dispositif (12) de recirculation des gaz d'échappement (dispositif "AGR") pour des moteurs à combustion interne pendant un fonctionnement en conditions pauvres, dans lequel une grandeur de réglage qui a pour effet l'établissement ou le maintien d'un taux souhaité de recirculation des gaz d'échappement est préalablement délivrée à un moyen de réglage (28), disposé dans un conduit (26) de recirculation des gaz d'échappement, du dispositif AGR (12), et en ce qu'un écart entre une émission calculée de substances nocives par rapport à une émission de substances nocives mesurée par une sonde de NOₓ disposée en aval d'un catalyseur (16) à accumulation de NOₓ dans le parcours (14) des gaz d'échappement du moteur à combustion interne (10) est déterminé, une valeur de correction de la grandeur de réglage du moyen de réglage (28) du dispositif AGR (12) étant définie en fonction de l'amplitude de l'écart, **caractérisé en ce que**
- une émission de NOₓ provoquée par une percée du catalyseur et mesurée par la sonde de NOₓ (18) est comparée à une émission calculée de NOₓ en cas de percée et **en ce que**
- la détermination de l'émission calculée de NOₓ en cas de percée s'effectue sur base d'une activité NOₓ du catalyseur (16) à accumulation de NOₓ déterminée lorsque le moteur à combustion interne (10) fonctionne en conditions pauvres stratifiées et en particulier dans la plage de lambda > 1,8.

2. Procédé selon la revendication 1, **caractérisé en ce que** le calcul des émissions de NOₓ suite à une percée s'effectue sur base d'un modèle de l'activité NOₓ du catalyseur (16) à accumulation de NOₓ à l'état frais.

3. Procédé selon la revendication 1, **caractérisé en ce que** le calcul des émissions de NOₓ en cas de percée s'effectue sur base d'une activité NOₓ du catalyseur (16) à accumulation de NOₓ déterminée pendant une durée antérieure prédéterminable.

4. Procédé selon la revendication 3, **caractérisé en ce que** la durée antérieure prédéterminable est d'au plus 30 minutes.

5. Procédé selon l'une des revendications précédentes, **caractérisé en ce que** la commande du taux AGR s'effectue pendant que le moteur à combustion interne (10) fonctionne en conditions homogènes et pauvres et en particulier dans une plage de lambda de 1,001 à 1,6.

6. Procédé selon l'une des revendications précédentes, **caractérisé en ce que** l'écart entre les émissions doit dépasser une valeur de seuil prédéterminée avant que la commande du taux AGR ait lieu.

7. Procédé selon l'une des revendications précédentes, **caractérisé en ce que** l'écart des émissions est déterminé pendant un intervalle de mesure prédéterminable, la durée de l'intervalle de mesure étant définie en fonction de l'émission brute de NOₓ du moteur à combustion interne (10) et/ou de l'émission calculée de NOₓ en cas de percée.

8. Procédé selon l'une des revendications précédentes, **caractérisé en ce que** la valeur de correction est déterminée à l'aide d'une ligne caractéristique de l'écart des émissions.

9. Procédé selon l'une des revendications précédentes, **caractérisé en ce que** la valeur de correction est de plus définie en fonction des conditions de charge.

10. Procédé selon l'une des revendications précédentes, **caractérisé en ce que** la valeur de correction n'est prise en compte que lorsqu'elle est supérieure à une valeur minimale.

11. Procédé selon l'une des revendications précédentes, **caractérisé en ce que** la valeur de correction est limitée par une valeur maximale.

12. Procédé selon l'une des revendications 10 à 11, **caractérisé en ce que** la valeur minimale et/ou la valeur maximale sont définies en fonction d'une situation de conduite et/ou d'un comportement de conduite.

13. Dispositif pour commander le taux de recirculation des gaz d'échappement ("AGR") d'un dispositif de recirculation des gaz d'échappement (dispositif "AGR") pour des moteurs à combustion interne pendant un fonctionnement en conditions pauvres, dans lequel une grandeur de réglage qui a pour effet l'établissement ou le maintien d'un taux souhaité de recirculation des gaz d'échappement est préalablement délivrée à un moyen de réglage, disposé dans un conduit de recirculation des gaz d'échappement, du dispositif AGR, et en ce que sont prévus des moyens par lesquels un écart entre une émission calculée de substances nocives par rapport à une émission de substances nocives mesurée par une sonde de NOₓ (18) disposée dans le parcours (14) des gaz d'échappement du moteur à combustion interne (10) est déterminé, une valeur de correction de la grandeur de réglage du moyen de réglage (28) du dispositif AGR (12) étant définie en fonction de l'amplitude de l'écart, **caractérisé en ce que**
- une émission de NOₓ provoquée par une percée du catalyseur et mesurée par la sonde de NOₓ (18) est comparée à une émission calculée de NOₓ en cas de percée et **en ce que**
- la détermination de l'émission calculée de NOₓ en cas de percée s'effectue sur base d'une activité NOₓ du catalyseur (16) à accumulation de NOₓ déterminée lorsque le moteur à combustion interne (10) fonctionne en conditions pauvres stratifiées et en particulier dans la plage de lambda > 1,8.

14. Dispositif selon la revendication 13, **caractérisé en ce que** ces moyens comprennent un appareil de commande (30) dans lequel une procédure de commande du dispositif AGR (12) est conservée sous forme numérisée.

15. Dispositif selon la revendication 14, **caractérisé en ce que** l'appareil de commande (30) fait partie d'un appareil (24) de commande du moteur.

16. Procédé selon l'une des revendications 13 à 15, **caractérisé en ce que** le moyen de réglage (28) est une vanne de régulation et la grandeur de commande est une section transversale d'ouverture un parcours de réglage de la vanne de régulation.

17. Dispositif selon l'une des revendications 13 à 16, **caractérisé en ce que** le moyen de réglage (28) est une soupape d'étranglement et **en ce que** la grandeur de réglage étant l'angle d'ouverture de la soupape d'étranglement.
